(19) Europäisches Patentamt
European Patent Office
Office européen des brevets

(11) **EP 4 386 635 A1**

(12) **EUROPEAN PATENT APPLICATION**

(43) Date of publication:
**19.06.2024   Bulletin 2024/25**

(21) Application number: **23213987.3**

(22) Date of filing: **04.12.2023**

(51) International Patent Classification (IPC):
**G06N 10/60** (2022.01)

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.12.2022   JP 2022199676**

(71) Applicant: **DENSO CORPORATION**
**Aichi-pref. 448-8661 (JP)**

(72) Inventor: **KADOWAKI, Tadashi**
**Kariya-city, Aichi-pref.,, 448-8661 (JP)**

(74) Representative: **Winter, Brandl - Partnerschaft mbB**
**Alois-Steinecker-Straße 22**
**85354 Freising (DE)**

(54) **QUANTUM COMPUTING SYSTEM, QUANTUM COMPUTING DEVICE, PROCESSING METHOD, AND PROCESSING PROGRAM**

(57)    An optimization process for sequentially determining an optimal value of a contribution of an orthogonal magnetic field function based on a final state in an annealing process, for each of binary variable qubits that constitute an optimal solution of a combinatorial optimization problem, includes, when designating, as an optimal qubit, a qubit providing an optimal evaluation index in an evaluation of a final state of the annealing process in which a strength parameter of a pre-optimization qubit is varied for having a maximum value of the orthogonal magnetic field function, (i) extracting of the optimal qubit based on the evaluation index; (ii) determining of the strength parameter; and (iii) outputting of the optimal solution by mapping a set of the strength parameters determined for all qubits.

**FIG. 10**

**EP 4 386 635 A1**

**Description**

The present disclosure relates to a processing technology for solving a combinatorial optimization problem with binary variables.

Non-Patent Document 1 discloses quantum annealing that processes qubits corresponding to binary variables, as a processing technique for solving a combinatorial optimization problem, for example.

Non-Patent Document 1: Tadashi Kadowaki and Hidetoshi Nishimori, "Quantum annealing in the transverse Ising model." Phys. Rev. E 58, 5355 (1998)

However, when quantum annealing that has a simple time-variation of the transverse magnetic field only is applied as in Non-Patent Document 1, there may be a difficulty in order to output the optimal solution having high-accuracy within the short processing time, expected for the quantum computing system.

It is one objective of the present disclosure to provide a quantum computing system that achieves both reduction in processing time and high-accuracy output of optimal solutions.

Another objective of the present disclosure is to provide a quantum computing device that achieves both reduction in processing time and high-accuracy output of optimal solutions.

Yet another objective of the present disclosure is to provide a processing method that achieves both reduction in processing time and high-accuracy output of optimal solutions.

Still yet another objective of the present disclosure is to provide a processing program that achieves both reduction in processing time and high-accuracy output of optimal solutions.

A first aspect of the present disclosure is a processing system controlling quantum annealing and a quantum gate for processing a binary variable qubit to solve a combinatorial optimization problem of binary variables, in which a processor is provided, and

the processor is configured to execute:

an annealing process for individually time-controlling a contribution of each of:

(a) a cost function optimized in the combinatorial optimization problem;
(b) a transverse magnetic field function defining a magnetic field component orthogonal to the cost function; and
(c) an orthogonal magnetic field function defining a magnetic field component orthogonal to the cost function and the transverse magnetic field function, and

an optimization process for sequentially determining, for each of the binary variable qubits that constitute an optimal solution of the combinatorial optimization problem, an optimal value of the contribution of the orthogonal magnetic field function based on a final state in the annealing process, and

an optimal qubit is defined as a qubit providing an optimal evaluation index in an evaluation of a final state of the annealing process in which a strength parameter of a pre-optimization qubit is varied for having a maximum value of the orthogonal magnetic field function, the optimization process includes:

(i) extracting of the optimal qubit based on the evaluation index, which is phase information of a controlled qubit whose final states before and after the variation of the strength parameter are phase kicked-back states by a quantum gate circuit;
(ii) determining of the strength parameter, which is the optimal value of the extracted optimal qubit, according to the evaluation index; and
(iii) outputting of the optimal solution by mapping a set of the strength parameters determined for all qubits.

A second aspect of the present disclosure is a quantum computing device controlling quantum annealing and a quantum gate for processing a binary variable qubit to solve a combinatorial optimization problem of binary variables, the quantum computing device comprising:

a processor, wherein

(A) an annealing process is defined as a process for individually time-controlling a contribution of each of:

(a) a cost function optimized in the combinatorial optimization problem;
(b) a transverse magnetic field function defining a magnetic field component orthogonal to the cost function; and
(c) an orthogonal magnetic field function defining a magnetic field component orthogonal to the cost function and the transverse magnetic field function; and

(B) an optimization process is defined as a process for sequentially determining, for each of the binary variable qubits that constitute an optimal solution of the combinatorial optimization problem, an optimal value of the contribution of the orthogonal magnetic field function based on a final state in the annealing process, and

(C) an optimal qubit is defined as a qubit for providing an optimal evaluation index in an evaluation of a final state of the annealing process in which a strength parameter of a pre-optimization qubit is varied for having a maximum value of the orthogonal magnetic field function,

the processor is configured to perform the optimization process including:

(i) extracting of the optimal qubit based on the evaluation index, which is phase information of a controlled qubit whose final states before and after the variation of the strength parameter are phase kicked-back states by a quantum gate circuit;

(ii) determining of the strength parameter, which is the optimal value of the extracted optimal qubit, according to the evaluation index; and

(iii) outputting of the optimal solution by mapping a set of the strength parameters determined for all qubits.

A third aspect of the present disclosure is a processing method performed by a processor, for controlling quantum annealing and a quantum gate for processing a binary variable qubit and for solving a combinatorial optimization problem of binary variables, which includes;

an annealing process for individually time-controlling a contribution of each of:

(a) a cost function optimized in the combinatorial optimization problem;

(b) a transverse magnetic field function defining a magnetic field component orthogonal to the cost function; and

(c) an orthogonal magnetic field function defining a magnetic field component orthogonal to the cost function and the transverse magnetic field function; and

an optimization process for sequentially determining, for each of the binary variable qubits that constitute an optimal solution of the combinatorial optimization problem, an optimal value of the contribution of the orthogonal magnetic field function based on a final state in the annealing process, and

an optimal qubit is defined as a qubit providing an optimal evaluation index in an evaluation of a final state of the annealing process in which a strength parameter of a pre-optimization qubit is varied for having a maximum value of the orthogonal magnetic field function, the optimization process includes:

(i) extracting of the optimal qubit based on the evaluation index, which is phase information of a controlled qubit whose final states before and after the variation of the strength parameter are phase kicked-back states by a quantum gate circuit;

(ii) determining of the strength parameter, which is the optimal value of the extracted optimal qubit, according to the evaluation index; and

(iii) outputting of the optimal solution by mapping a set of the strength parameters determined for all qubits.

A fourth aspect of the present disclosure is a processing method performed by a processor, for controlling quantum annealing and a quantum gate for processing a binary variable qubit and for solving a combinatorial optimization problem of binary variables, which includes;

a process is defined as an annealing process for individually time-controlling a contribution of each of:

(a) a cost function optimized in the combinatorial optimization problem;

(b) a transverse magnetic field function defining a magnetic field component orthogonal to the cost function; and

(c) an orthogonal magnetic field function defining a magnetic field component orthogonal to the cost function and the transverse magnetic field function; and

a process is defined as an optimization process for sequentially determining, for each of the binary variable qubits that constitute an optimal solution of the combinatorial optimization problem, an optimal value of the contribution of the orthogonal magnetic field function based on a final state in the annealing process, and

an optimal qubit is defined as a qubit providing an optimal evaluation index in an evaluation of a final state of the annealing process in which a strength parameter of a pre-optimization qubit is varied for having a maximum value of the orthogonal magnetic field function, the optimization process includes:

(i) extracting of the optimal qubit based on the evaluation index, which is phase information of a controlled qubit whose final states before and after the variation of the strength parameter are phase kicked-back states by a quantum gate circuit;
(ii) determining of the strength parameter, which is the optimal value of the extracted optimal qubit, according to the evaluation index; and
(iii) outputting of the optimal solution by mapping a set of the strength parameters determined for all qubits.

A fifth aspect of the present disclosure is a processing program including instructions stored in a storage medium and executed by a processor, for controlling quantum annealing and a quantum gate for processing a binary variable qubit and for solving a combinatorial optimization problem of binary variables, which includes;

an annealing process performed according to the instructions for individually time-controlling a contribution of each of:

(a) a cost function optimized in the combinatorial optimization problem;
(b) a transverse magnetic field function defining a magnetic field component orthogonal to the cost function; and
(c) an orthogonal magnetic field function defining a magnetic field component orthogonal to the cost function and the transverse magnetic field function; and

an optimization process performed according to the instructions for sequentially determining, for each of the binary variable qubits that constitute an optimal solution of the combinatorial optimization problem, an optimal value of the contribution of the orthogonal magnetic field function based on a final state in the annealing process, and
an optimal qubit is defined as a qubit providing an optimal evaluation index in an evaluation of a final state of the annealing process in which a strength parameter of a pre-optimization qubit is varied for having a maximum value of the orthogonal magnetic field function, the optimization process includes:

(i) extracting of the optimal qubit based on the evaluation index, which is phase information of a controlled qubit whose final states before and after the variation of the strength parameter are phase kicked-back states by a quantum gate circuit;
(ii) determining of the strength parameter, which is the optimal value of the extracted optimal qubit, according to the evaluation index; and
(iii) outputting of the optimal solution by mapping a set of the strength parameters determined for all qubits.

A sixth aspect of the present disclosure is a processing program including instructions stored in a storage medium and executed by a processor, for controlling quantum annealing and a quantum gate for processing a binary variable qubit and for solving a combinatorial optimization problem of binary variables, which includes;

a process designated as an annealing process for individually time-controlling a contribution of each of:

(a) a cost function optimized in the combinatorial optimization problem;
(b) a transverse magnetic field function defining a magnetic field component orthogonal to the cost function; and
(c) an orthogonal magnetic field function defining a magnetic field component orthogonal to the cost function and the transverse magnetic field function; and

a process designated as an optimization process for sequentially determining, for each of the binary variable qubits that constitute an optimal solution of the combinatorial optimization problem, an optimal value of the contribution of the orthogonal magnetic field function based on a final state in the annealing process, and
an optimal qubit is defined as a qubit providing an optimal evaluation index in an evaluation of a final state of the annealing process in which a strength parameter of a pre-optimization qubit is varied for having a maximum value of the orthogonal magnetic field function, the optimization process includes:

(i) extracting of the optimal qubit based on the evaluation index, which is phase information of a controlled qubit whose final states before and after the variation of the strength parameter are phase kicked-back states by a quantum gate circuit;
(ii) determining of the strength parameter, which is the optimal value of the extracted optimal qubit, according to the evaluation index; and
(iii) outputting of the optimal solution by mapping a set of the strength parameters determined for all qubits.

In the optimization process of the first to sixth aspects, the optimal value of the contribution of the orthogonal magnetic field function is sequentially determined for each of the qubits respectively corresponding to the binary variables based on the final state in the annealing process in which the contributions of the cost function, the transverse magnetic field function and the orthogonal magnetic field function are individually time-controlled. Then, a qubit with an optimal evaluation index for evaluating a final state in the annealing process, in which a strength parameter of a pre-optimization qubit is varied to have a maximum value of the orthogonal magnetic field function, is extracted as an optimal qubit. At this time, the extraction of the optimal qubit is performed based on the evaluation index, which is the phase information of the controlled qubit whose final states before and after the variation of the strength parameter have been phase kicked-back states by the quantum gate circuit.

According to the above, even when an annealing time in the annealing process is shortened, by sequentially determining the strength parameters that are the optimal values of the extracted optimal qubits according to the evaluation index, a solution space of the combinatorial optimization problem can be narrowed down. Accordingly, highly-accurate optimal solution can be output by mapping the set of the strength parameters determined for all qubits. Therefore, both of the reduction of the annealing time and the output of the optimal solution with high-accuracy are achievable without compromise.

BRIEF DESCRIPTION OF THE DRAWINGS

Objects, features, and advantages of the present disclosure will become more apparent from the following detailed description made with reference to the accompanying drawings, in which:

FIG. 1 is a block diagram illustrating an overall configuration of a quantum computing system according to one embodiment;
FIG. 2 is a block diagram illustrating a functional configuration of the quantum computing system according to the one embodiment;
FIG. 3 is a time transition diagram for explaining an annealing process according to the one embodiment;
FIG. 4 is a graph for explaining the annealing process according to the one embodiment;
FIG. 5 is a block diagram illustrating a quantum gate circuit according to the one embodiment;
FIG. 6 is a diagram of a table for explaining an optimization process according to the one embodiment;
FIG. 7 is another diagram of a table for explaining the optimization process according to the one embodiment;
FIG. 8 is yet another diagram of a table for explaining the optimization process according to the one embodiment;
FIG. 9 is still yet another diagram of a table for explaining the optimization process according to the one embodiment; and
FIG. 10 is a sequence diagram illustrating a processing method according to the one embodiment.

DETAILED DESCRIPTION

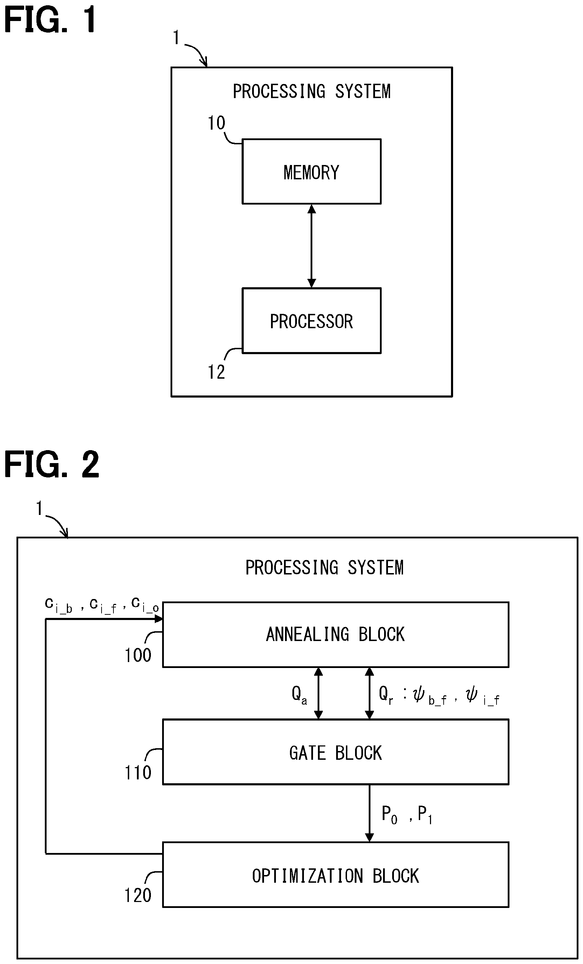

Hereinafter, one embodiment of the present disclosure is described with reference to the drawings.
A quantum computing system 1 of the one embodiment shown in FIG. 1 is a quantum computing system configured to solve a combinatorial optimization problem with binary variables by controlling a quantum annealing with binary qubits. The quantum computing system 1 includes, as a plurality of dedicated computers, an annealing quantum computer that executes quantum bit-based operations by a quantum annealing method, and a gate quantum computer that executes quantum bit-based operations by a quantum gate method. The quantum computing system 1 may also include a classical computer that performs operations with classical bits as a dedicated computer in a combination of the annealing quantum computer and the gate quantum computer. At least one of the annealing quantum computer and the gate quantum computer, which are main components of the quantum computing system 1, may be, for example, a NISQ (Noisy Intermediate Scale Quantum) device or the like.
A dedicated computer that constitutes the quantum computing system 1 has a plurality of memories 10 and a plurality of processors 12. The plurality of memories 10 are at least one type of non-transitory, tangible storage medium, such as a semiconductor memory, a magnetic medium, and an optical medium, for non-transitory storage of computer readable programs and data. The plurality of processors 12 include at least (i) a quantum processing unit capable of realizing the quantum annealing method and (ii) a quantum processing unit capable of realizing the quantum gate method. The processors 12 of the classical computer that is combined with the quantum computer as the dedicated computer constituting the quantum computing system 1 may include at least one type of, for example, a CPU (Central Processing Unit), a GPU (Graphics Processing Unit), an RISC (Reduced Instruction Set Computer) CPU, and so on.
In the quantum computing system 1, the processors 12 control each of (i) the quantum annealing and (ii) the quantum gate that respectively process binary variable qubits, and executes the instructions included in the processing programs stored in a plurality of memories 10 to solve the combinatorial optimization problem of the binary variables. Thereby, the processors 12 constructs a plurality of functional blocks for controlling the quantum annealing and the quantum gate respectively to solve the combinatorial optimization problem. The functional blocks built in the quantum computing system 1 include an annealing block 100, a gate block 110 and an optimization block 120 as shown in FIG. 2.

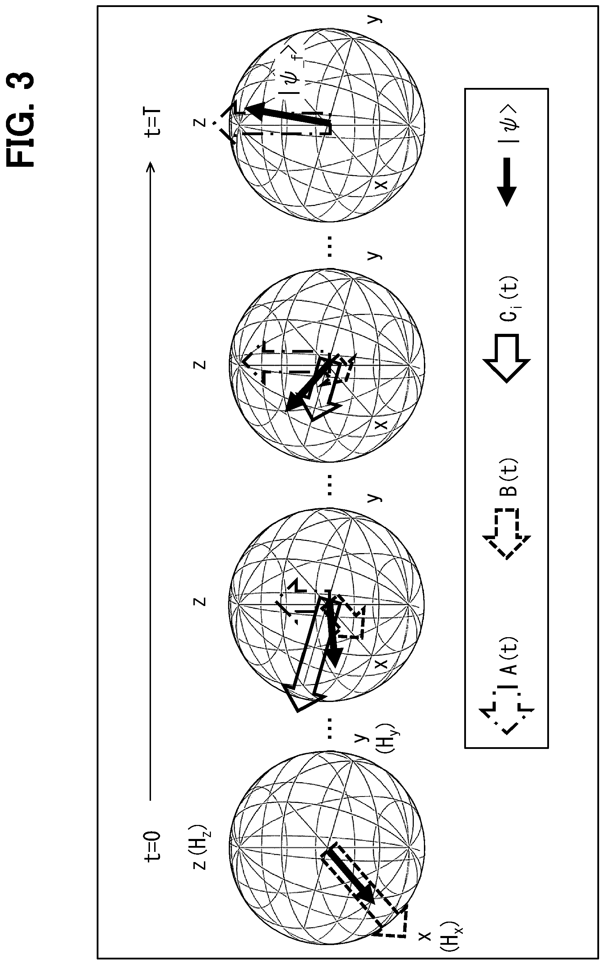

The annealing block 100 is implemented by the processors 12 in an annealing quantum computer or jointly with the processors 12 and the memory 10 set in a classical computer. The annealing block 100 performs an annealing process by the quantum annealing method. Specifically, the annealing block 100 of the present embodiment is configured to perform the annealing process such that contribution of each of a cost function $H_z$, a transverse magnetic field function $H_x$, and an orthogonal magnetic field function $H_y$ shown in FIG. 3 is individually controlled in a time-dependent manner. Hereinafter, the annealing process by the annealing block 100 is referred to as a Qa (quantum annealing) process.

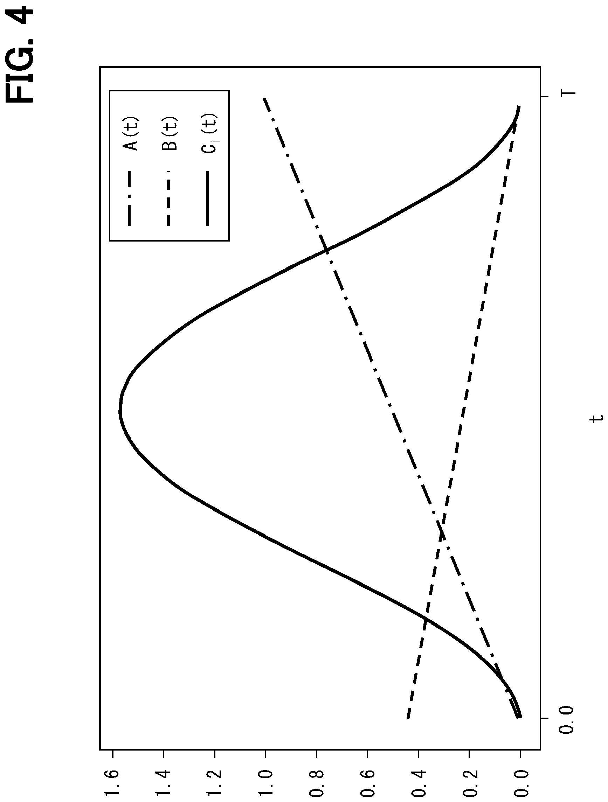

The QA process is based on an Ising model (i.e. spin glass model) in which binary variables of the combinatorial optimization problem are associated with qubits. As represented by a number 1, in the QA process, the cost function $H_z$, the transverse magnetic field function $H_x$, and the orthogonal magnetic field function $H_y$ are combined to serve as a total Hamiltonian H. In the number 1, t is defined as an elapsed time in the QA process, and varies in a numerical range between 0 and T. As shown in FIGS. 3 and 4, specifically in the present embodiment, t is defined as time until (i.e., up to) an annealing time T described later.

[Equation 1]

$$\mathcal{H} = A(t)\mathcal{H}_z + B(t)\,\mathcal{H}_x + \mathcal{H}_y$$

The cost function $H_z$ is defined as a z-axis direction component of the total Hamiltonian H shown in FIG. 3. The cost function $H_z$ represented by a number 2 is a function that is converged by optimization in the combinatorial optimization problem. In the number 2, $\sigma_i^z$ and $\sigma_j^z$ are Pauli matrices of the z-axis direction component for a pair of qubits with indices i and j, a combination of which is to be optimized. In the number 2, $J_{ij}$ is a coupling constant represented by a number 3 using a weight matrix $w_{ij}$ of the combinatorial optimization problem. In particular, the coupling constant $J_{ij}$ of the present embodiment is defined as a random variable or the like that satisfies numbers 4, 5 such that the interaction based on SK (Sherrington-Kirkpatrick) Model is applied to the combinatorial optimization problem. Here, N in the number 5 is the number of qubits corresponding to the number of binary variables, and is the number of spins constituting the cost function $H_z$. In the combinatorial optimization problem using such cost function $H_z$, the combinations of N qubits having the $2^N$ combinations are optimized.

[Equation 2]

$$\mathcal{H}_z = -\sum_{i<j} J_{ij}\sigma_i^z\sigma_j^z$$

[Equation 3]

$$J_{ij} = -w_{ij}$$

[Equation 4]

$$p(J_{ij}) \sim \frac{1}{\sqrt{2\pi s^2}} \exp\left(-\frac{J_{ij}^2}{2s^2}\right)$$

[Equation 5]

$$s^2 = \frac{1}{N-1}$$

A coefficient function A(t) acting on the cost function $H_z$ in the number 1 is represented by a number 6 as a time function as shown in FIG. 4 for an individual, time control of the cost function $H_z$. In the number 6, t is the elapsed time as in the number 1. In the number 6, T is the annealing time from the start to the end of the QA process, and is simplified as a value 1 in the present embodiment. In the number 6, a is a strength parameter for maximizing the coefficient function A(t), and is simplified as a value 1 in the present embodiment.

[Equation 6]

$$A(t) = at/T$$

The transverse magnetic field function $H_x$ is a x-axis direction component of the total Hamiltonian H shown in FIG. 3. The transverse magnetic field function $H_x$ is represented by a number 7 as a function for the quantum fluctuation representing a uniform magnetic field component in the x-axis direction orthogonal to the cost function $H_z$ in the z-axis direction. In the number 7, $\sigma_i^x$ is a Pauli matrix of the x-axis direction component for a qubit with index i, a combination of which is to be optimized.

[Equation 7]

$$\mathcal{H}_x = -\sum_i \sigma_i^x$$

A coefficient function B(t) acting on the horizontal magnetic field function $H_x$ in the number 1 is represented by a number 8 as a time function as shown in FIG. 4 for an individual, time control of the horizontal magnetic field function $H_x$. In the number 8, t is the elapsed time as in the number 1. In the number 8, T is the annealing time as in the number 6. In the number 8, b is a strength parameter for maximizing the coefficient function B(t). In the present embodiment, an optimal parameter, e.g., 0.43, which is tested by experiments in advance is set for the strength parameter b.

[Equation 8]

$$B(t) = b(1 - t/T)$$

The orthogonal magnetic field function $H_y$ is a y-axis direction component of the total Hamiltonian H shown in FIG. 3. The orthogonal magnetic field function $H_y$ is represented by a number 9 as a function representing a non-uniform magnetic field component in the y-axis direction orthogonal to both of (i) the cost function $H_z$ in the z-axis direction and (ii) the transverse magnetic field function $H_x$ in the x-axis direction. In the number 9, $\sigma_i^y$ is a Pauli matrix of the y-axis direction component for a qubit with index i, a combination of which is to be optimized.

[Equation 9]

$$\mathcal{H}_y = -\sum_i C_i(t)\sigma_i^y$$

A coefficient function $C_i(t)$ constituting the orthogonal magnetic field function $H_y$ in the number 9 is represented by a number 10 as a time function as shown in FIG. 4, for an individual, time control of the orthogonal magnetic field function $H_y$ for a qubit with index i. In the number 10, t is the elapsed time as in the number 1. In the number 10, T is the annealing time as in the number 6. In the number 10, $c_i$ is a strength parameter for giving the coefficient function $C_i(t)$ a maximum value, in correspondence to a qubit with the index i. In the present embodiment, the $c_i$ is set by the optimization block 120 as described later.

[Equation 10]

$$C_i(t) = c_i \sin^2(\pi t/T)$$

Through the QA process, a final state $\psi_f$ of a wave function $\psi$ shown in FIG. 3 for the total Hamiltonian H is obtained based on the time control of the total Hamiltonian by the quantum annealing. Under the time control of the total Hamiltonian H in the QA process, the final state $\psi_f$ at time t = 1 is obtained according to the Schrödinger number represented by a number 11.

[Equation 11]

$$\frac{d}{dt}|\psi\rangle = -i\mathcal{H}|\psi\rangle = -i\big(A(t)\mathcal{H}_z + B(t)\,\mathcal{H}_x + \mathcal{H}_y\big)|\psi\rangle$$

In the time control of the QA process as shown in FIGS. 3 and 4, the coefficient function $A(t)$, which is a contribution of the cost function $H_z$ to the total Hamiltonian H, is gradually increased from zero to a final value as time t elapses. Particularly, in the time control of the present embodiment, an output value of the coefficient function $A(t)$ is increased, to a set value of the strength parameter a which is an end value, proportionally to the elapsed time t. Further, in the time control of the QA process, the coefficient function $B(t)$, which is a contribution of the transverse magnetic field function $H_x$ to the total Hamiltonian H, is decreased from an initial value to zero as time t elapses. Particularly, in the time control of the present embodiment, an output value of the coefficient function $B(t)$ is decreased, from a set value of the strength parameter b which is an initial value, proportionally to the elapsed time t. Further, in the time control of the QA process, the coefficient function $C_i(t)$, which is a contribution of the orthogonal magnetic field function $H_y$ to the total Hamiltonian H, is increased from zero to the maximum value as time t elapses, and then is decreased to zero as time t elapses. In particular, the time control of the present embodiment varies the output value of the coefficient function $C_i(t)$ proportionally to a square of a sine function, so that the coefficient function $C_i(t)$ in a wave form takes a maximum value which is a set value of the strength parameter $c_i$ at a middle point between time 0 and an elapsed time t for a qubit with index i.

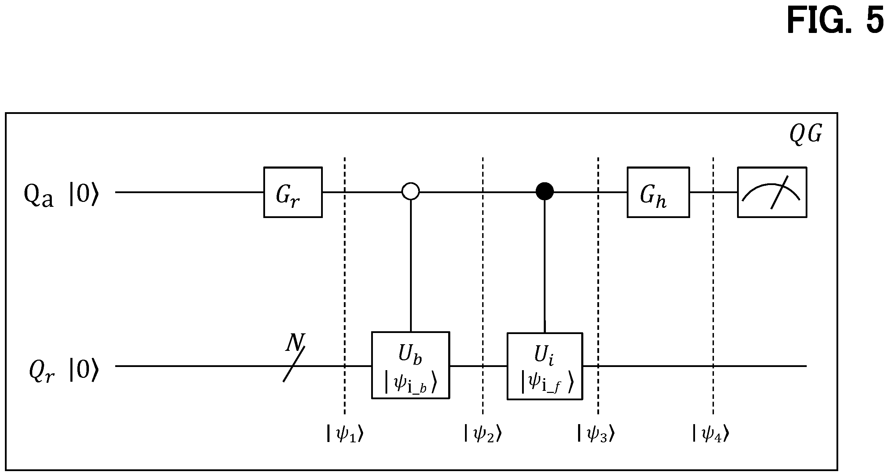

The gate block 110 shown in FIG. 2 is implemented (i) by the processors 12 in a gated quantum computer or (ii) as a combination of (a) the processors 12 in a gated quantum computer and (b) a set of the processors 12 and the memory 10 in a classical computer. The gate block 110 constructs a quantum gate circuit QG of a quantum gate system as shown in FIG. 5. Specifically, the quantum gate circuit QG receives a controlled qubit Qa for one qubit as an input. Here the controlled qubit Qa is an ancillary qubit whose input state is initialized to |0>. N pieces of register qubits $Q_r$ are set with their input states respectively initialized to |0>.

The quantum gate circuit QG causes a rotation gate $G_r$ to act on the input controlled qubit Qa. The rotation gate $G_r$ is a control gate that transforms the controlled qubit Qa into a superposed state of a state |0> and a state |1> according to a number 12. A state $|\psi_1\rangle$ converted in such manner is represented by a number 13.

[Equation 12]

$$G_r = \frac{1}{\sqrt{2}}\begin{pmatrix} 1 & -i \\ -i & 1 \end{pmatrix}$$

[Equation 13]

$$|\psi_1\rangle = (|0\rangle - i|1\rangle)|0\rangle/\sqrt{2}$$

The quantum gate circuit QG causes a reference unitary gate $U_b$ that kicks back a phase corresponding to a reference final state $\psi_{b\_f}$, which is described later, among final states $\psi_{\_f}$ of a wave function $\psi$ for the total Hamiltonian H in the QA process, to act on the controlled qubit Qa. The reference unitary gate $U_b$ performs the QA process on the register qubit $Q_r$ of a branch in which the state of the controlled qubit Qa in the superposed state is |0>, and sets the state of the register qubit $Q_r$ of the corresponding branch to the reference final state $\psi_{b\_f}$. The state $|\psi_2\rangle$ thus subjected to phase kickback is represented by a number 14.

[Equation 14]

$$|\psi_2\rangle = \big(|0\rangle|\psi_{b\_f}\rangle - i|1\rangle|0\rangle\big)/\sqrt{2}$$

The quantum gate circuit QG causes an analysis unitary gate $U_i$ that kicks back a phase corresponding to an analysis final state $\psi_{i\_f}$, which is described later, among the final states $\psi_{\_f}$ of the wave function $\psi$ for the full Hamiltonian H in the QA process, to act on the controlled qubit Qa. The analysis unitary gate $U_i$ performs the QA process on the register qubit $Q_r$ of a branch in which the state of the controlled qubit Qa in the superposed state is |1>, and sets the state of the register qubit $Q_r$ of the corresponding branch to the final state $\psi_{i\_f}$. Thus, a state $|\psi3\rangle$ after further phase

kickback is represented by a number 15.

[Equation 15]

$$|\psi_3\rangle = \big(|0\rangle|\psi_{b\_f}\rangle - i|1\rangle|\psi_{i\_f}\rangle\big)/\sqrt{2}$$

The quantum gate circuit QG causes an Hadamard gate $G_h$ to act on the controlled qubit Qa to which the final states $\psi_{b\_f}$ and $\psi_{i\_f}$ are phase-kickbacked. The Hadamard gate $G_h$ is a control gate that Hadamard-transforms the controlled qubit Qa by an Hadamard matrix of a number 16. A state $|\psi 4\rangle$ thus subjected to the Hadamard transformation is represented by a number 17. As described above, in the quantum gate circuit QG, by the action of the two types of unitary gates $U_b$ and $U_i$, it is considered that the final states $\psi_{b\_f}$ and $\psi_{i\_f}$ before and after the variation of the strength parameter $c_i$, which is described later, are phase kickbacked for the controlled qubit Qa as shown in a number 17.

[Equation 16]

$$G_h = \frac{1}{\sqrt{2}}\begin{pmatrix} 1 & 1 \\ 1 & -1 \end{pmatrix}$$

[Equation 17]

$$|\psi_4\rangle = \big((|0\rangle + |1\rangle)|\psi_{b\_f}\rangle - i(|0\rangle - |1\rangle)|\psi_{i\_f}\rangle\big)/2$$
$$= |0\rangle\big(|\psi_{b\_f}\rangle - i|\psi_{i\_f}\rangle\big)/2 + |1\rangle\big(|\psi_{b\_f}\rangle + i|\psi_{i\_f}\rangle\big)/2$$

The quantum gate circuit QG outputs measurement data reflecting the phase information of the controlled qubit Qa. The measurement data output at this time are two types of probabilities $P_0$ and $P_1$. One probability $P_0$ is defined by a number 18 with respect to the state |0> of the controlled qubit Qa. The other probability $P_1$ is defined by a number 19 with respect to the state |1> of the controlled qubit Qa. Therefore, in the present embodiment, the probability values of the state |0> and the state |1> appearing by repeated (for example, 1000 or more) calculations using the quantum gate circuit QG are output as estimated measurement data of the probabilities $P_0$ and $P_1$, respectively.

[Equation 18]

$$P_0 = \big|\big(|\psi_{b\_f}\rangle - i|\psi_{i\_f}\rangle\big)/2\big|^2$$

[Equation 19]

$$P_1 = \big|\big(|\psi_{b\_f}\rangle + i|\psi_{i\_f}\rangle\big)/2\big|^2$$

The optimization block 120 shown in FIG. 2 is realized either (i) as a set of the processors 12 and the memory 10 in a classical computer, or (ii) a combination of (a) such a set and (b) at least one of the processor 12 in an annealing quantum computer and the processor 12 in a gate quantum computer. The optimization block 120 performs an optimization process to narrow down the solution space of the combinatorial optimization problem in order to solve the combinatorial optimization problem with binary variables. Specifically, the optimization block 120 is configured to perform the optimization process by sequentially determining an optimal value of the contribution of the orthogonal magnetic field function $H_y$ for each of the binary qubits of the combinatorial optimization problem based on the final state $\psi_{\_f}$ in the QA process. Hereinafter, the optimization process performed by the optimization block 120 is referred to as a QGO (Quantum Greedy Optimization) process.

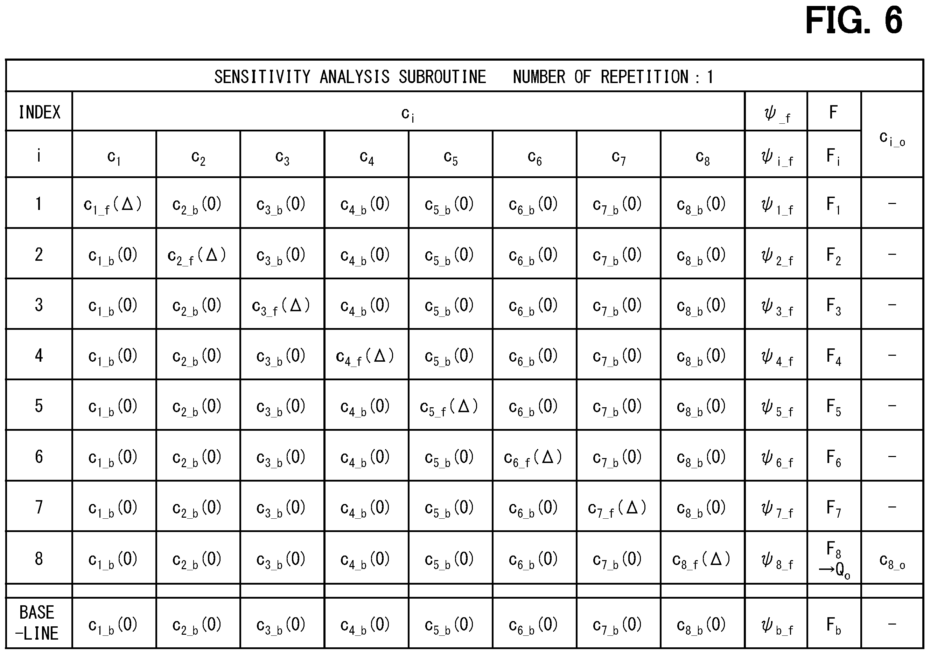

The QGO process initializes each of the strength parameters $c_i$, which cause the orthogonal magnetic field function $H_y$ to have a maximum value, to a reference strength parameter $c_{i\_b}$ represented by a number 20, for N qubits optimizing $2^N$ combinations, i.e., for all qubits before optimization with indices i = an integer of 1 to N. At this time, each of the reference strength parameters $c_{i\_b}$ is set to a value of 0 as shown in FIG. 6 especially for any qubit with index i in the present embodiment. Note that FIG. 6 and FIGS. 7 to 9, which is described later, illustrate a case of N = 8 (that is, i = an integer from 1 to 8).

[Equation 20]

$$c_{i\_b} = 0$$

In the QGO process, a strength parameter $c_{i\_f}$ is set as a parameter different from the reference strength parameter $c_{i\_b}$, as a corresponding strength parameter $c_i$ with an index i for each of the qubits before optimization, which is made by applying a minute variation amount $\Delta$ to the reference strength parameter $c_{i\_b}$. In the QGO process in which the reference strength parameter $c_{i\_b}$ is initialized to zero, the setting of the variation strength parameter $c_{i\_f}$ ($=\Delta$) is performed according to a scheme shown in FIG. 6. Therefore, in the present embodiment, the minute variation amount $\Delta$ is set to an optimal amount such as 0.1, which is tested by experiment in advance.

[Equation 21]

$$c_{i\_f} = c_{i\_b} + \Delta = \Delta$$

In the QGO process, a sensitivity analysis subroutine is repeatedly executed based on (i) the reference strength parameter $c_{i\_b}$ obtained by initializing the strength parameter $c_i$ and (ii) the variation strength parameter $c_{i\_f}$ which is obtained by further changing the reference strength parameter $c_{i\_b}$ with a minute variation amount. Specifically, in the sensitivity analysis subroutine, the strength parameters $c_{i\_b}$ and $c_{i\_f}$ are passed from the optimization block 120 to the annealing block 100 for each of the qubits before optimization as shown in FIG. 2.

In the sensitivity analysis subroutine, the gate block 110 controls the annealing block 100 to which the strength parameters $c_{i\_b}$ and $c_{i\_f}$ are passed. According to the above-described control, the annealing block 100 performs the QA process by quantum annealing as shown in FIG. 6 for the register qubit $Q_r$. At this time, the reference unitary gate $U_b$ and the analysis unitary gate $U_i$ act on the register qubit $Q_r$ as the QA process under the control of the quantum gate circuit QG. Through such QA process, a superposed state is obtained in which (i) the reference final state $\psi_{b\_f}$ corresponding to the reference strength parameter $c_{i\_b}$ which is the strength parameter $c_i$ before variation and (ii) the analysis final state $\psi_{i\_f}$ corresponding to the variation strength parameter $c_{i\_f}$ after variation of the strength parameter $c_i$ are controlled according to the state of the controlled qubit $Q_a$.

Here, in the QA process, the reference final state $\psi_{b\_f}$ prepared using the total Hamiltonian H having the reference strength parameter $c_{i\_b}$ of all indices i commonly used for all qubits before optimization as the reference strength parameter $c_{i\_b}$ is implemented by the reference unitary gate $U_b$. Together with the above, in the QA process, for each of the qubits before optimization, the analysis final state $\psi_{i\_f}$ corresponding to the parameter $c_{i\_f}$, (i) prepared by using the total Hamiltonian H including the variation strength parameter $c_{i\_f}$ corresponding to the index i and the reference strength parameter $c_{i\_b}$ not corresponding to the index i, and (ii) corresponding to the variation strength parameter $c_{i\_f}$ is implemented by the analysis unitary gate $U_i$.

The gate block 110, which has obtained the superposed state of the final states $\psi_{b\_f}$, $\psi_{i\_f}$ before and after variation of the strength parameter $c_i$ in the sensitivity analysis subroutine by controlling the annealing block 100, outputs, for each of the qubits before optimization, the probabilities $P_0$ and $P_1$ of the states |0> and |1> of the controlled qubit Qa from the quantum gate circuit QG. The probabilities $P_0$ and $P_1$ thus output are passed to the optimization block 120 as measurement data by the quantum gate circuit QG in the gate block 110 as shown in FIG. 2.

In the sensitivity analysis subroutine, the optimization block 120 performs an optimization operation to extracts, as an optimal qubit Qo, one qubit with the optimal evaluation index F from among all pre-optimization qubits corresponding to the passed measurement data having the probabilities $P_0$ and $P_1$. At this time, as the evaluation index F, an analysis evaluation index $F_i$ of the index i is assumed for an evaluation of the analysis final state $\psi_{i\_f}$ of the index i used for outputting the measurement data with the probabilities $P_0$ and $P_1$. Therefore, in particular, the analysis evaluation index $F_i$ is defined as a probability difference between the probabilities $P_0$ and $P_1$ according to a number 22.

[Equation 22]

$$F = F_i = P_0 - P_1 = \left| \left( |\psi_{b\_f}\rangle - i|\psi_{i\_f}\rangle \right)/2 \right|^2 - \left| \left( |\psi_{b\_f}\rangle + i|\psi_{i\_f}\rangle \right)/2 \right|^2$$

The number 22 is convertible into a number 23, according to transformation of numbers. According to the number 22, the analysis evaluation index $F_i$ represents an imaginary part $\mathrm{Im}\ \langle\psi_{b\_f}|\psi_{i\_f}\rangle$ of an inner product regarding the final states $\psi_{b\_f}$ and $\Psi_{i\_f}$ before and after the variation of the strength parameter $c_i$, from among the phase information kicked back by the quantum gate circuit QG, as the evaluation index F that is the phase information of the controlled qubit Qa.

[Equation 23]

$$F = F_i = \frac{1}{4}\left(\langle\psi_{b\_f}| + i\langle\psi_{i\_f}|\right)\left(|\psi_{b\_f}\rangle - i|\psi_{i\_f}\rangle\right) - \frac{1}{4}\left(\langle\psi_{b\_f}| - i\langle\psi_{i\_f}|\right)\left(|\psi_{b\_f}\rangle + i|\psi_{i\_f}\rangle\right)$$
$$= \frac{1}{4}\left(2 - i\langle\psi_{b\_f}|\psi_{i\_f}\rangle + i\langle\psi_{i\_f}|\psi_{b\_f}\rangle\right) - \frac{1}{4}\left(2 + i\langle\psi_{b\_f}|\psi_{i\_f}\rangle - i\langle\psi_{i\_f}|\psi_{b\_f}\rangle\right)$$
$$= \mathrm{Im}\langle\psi_{b\_f}|\psi_{i\_f}\rangle$$

Then, the optimization operation based on the evaluation index F in the sensitivity analysis subroutine extracts the optimal qubit Qo that maximizes an absolute value of the analysis evaluation index $F_i$ from among all the pre-optimization qubits according to a number 24 as shown in FIG. 6. Note that, in the number 24, the index i before the optimization operation is formally, or perfunctorily, represented using k and m so that the index of the optimal qubit Qo is treated as i after the optimization operation. Note also that FIG. 6 shows an example in which the optimal qubit Qo with index i = 8 is extracted in the first cycle of the sensitivity analysis subroutine.

[Equation 24]

$$i \leftarrow \underset{k\in\{m|c_m=0\}}{\mathrm{argmax}}\ F_k$$

In the sensitivity analysis subroutine, the optimization block 120 determines, as the strength parameter $c_i$ that has the optimal value of the extracted optimal qubit Qo, an optimal strength parameter $c_{i\_o}$ that satisfies a number 25 according to the analysis evaluation index $F_i$ corresponding to the optimal qubit Qo, as shown in FIG. 6. Here, $c_c$ in the number 25 is set, as a constant parameter common to all of N pieces of qubits, to an optimal parameter such as $\pi/2$ (that is, 1.57) that has been pre-verified by demonstration experiments in the present embodiment in particular. Note that FIG. 6 shows an example in which the optimal qubit Qo with index i = 8 is extracted and is determined as the optimal strength parameter $c_{i\_o}$ in the first cycle of the sensitivity analysis subroutine.

[Equation 25]

$$c_{i\_o} = -c_c\ \mathrm{sgn}\ F_i$$

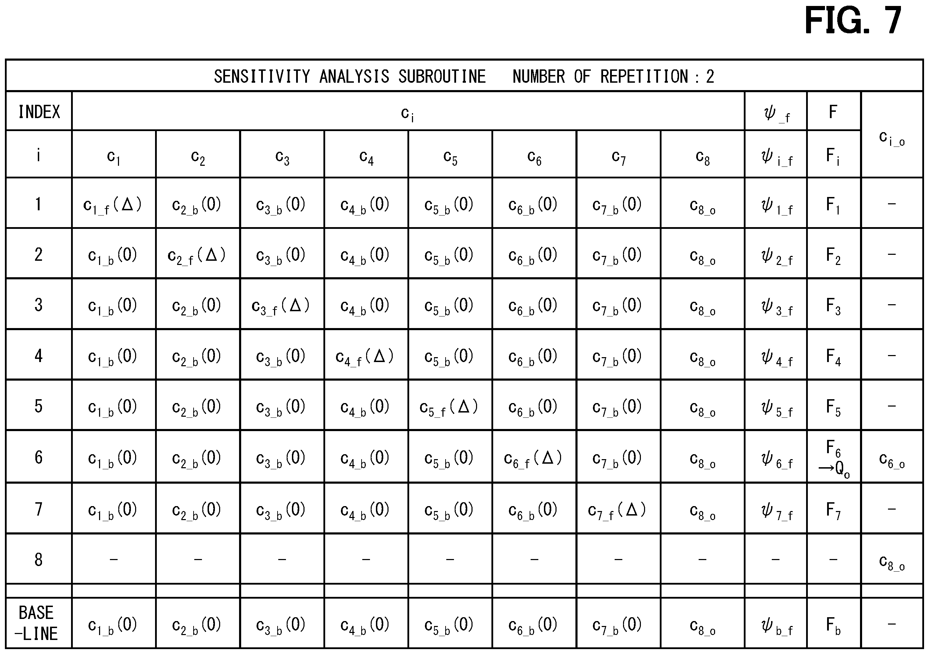

The optimization block 120 causes the sensitivity analysis subroutine to repeatedly change the strength parameters $c_{i\_b}$ and $c_{i\_f}$ passed from the optimization block 120 to the annealing block 100 and used for the QA process as shown in FIGS. 7 to 9, i.e., every time the optimal strength parameter $c_{i\_o}$ is determined. That is, in the second and subsequent cycles of the sensitivity analysis subroutine, for all optimal qubits Qo that have already been optimized in the preceding cycles of the sensitivity analysis subroutine, the corresponding optimal strength parameter $c_{i\_o}$ with index i is passed instead of the corresponding reference strength parameter $c_{i\_b}$ with index i.

As a result, in the second and subsequent cycles of the sensitivity analysis subroutine, when performing the QA process for obtaining the reference final state $\psi_{b\_f}$, the reference strength parameter $c_{i\_b}$ whose index i corresponds to that of the optimal strength parameter $c_{i\_o}$ is replaced with such an optimal strength parameter $c_{i\_o}$. Further, in the second and subsequent cycles of the sensitivity analysis subroutine, when performing the QA process for obtaining the analysis final state $\psi_{i\_f}$, the reference strength parameter $c_{i\_b}$ (a) whose index i does not correspond to that of the optimal strength parameter $c_{i\_o}$ and (b) whose index i corresponds to that of the optimal strength parameter $c_{i\_o}$ is replaced with the optimal strength parameter $c_{i\_o}$ for each of the pre-optimization qubits other than the optimal qubit(s) Qo.

In such manner, in the second and subsequent cycles of the sensitivity analysis subroutine, an optimal qubit Qo is extracted, based on the evaluation index F, which is the phase information of the controlled qubit Qa whose phase is kicked back by the quantum gate circuit QG, from among the remaining pre-optimization qubits other than the optimal qubit Qo in the past cycle. Further, in the second and subsequent cycles of the sensitivity analysis subroutine, an optimal strength parameter $c_{i\_o}$ is determined regarding the extracted optimal qubit Qo, based on the evaluation index F, which is the phase information of the controlled qubit Qa whose phase is kicked back by the quantum gate circuit QG.

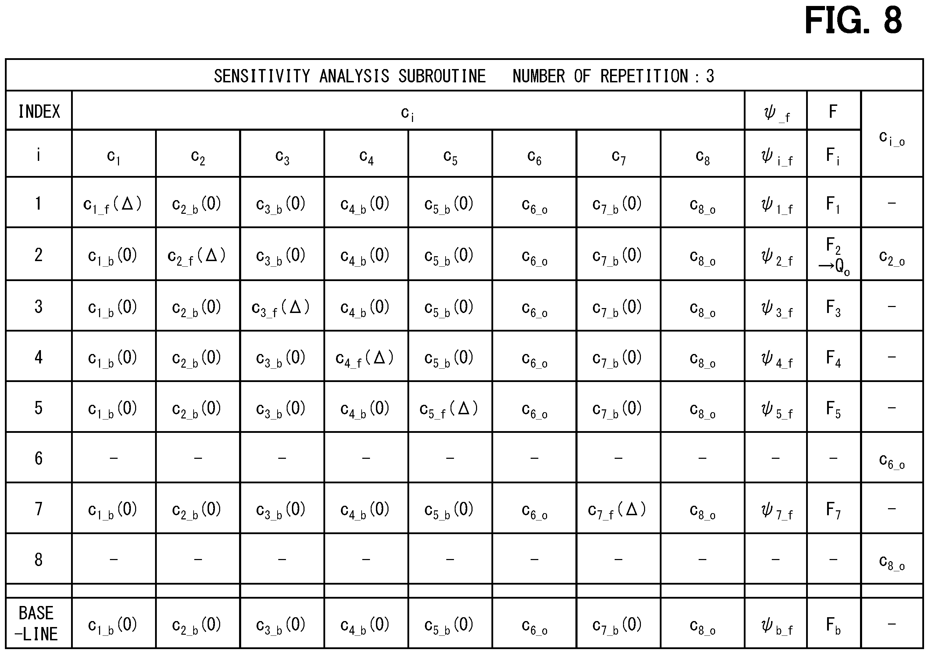

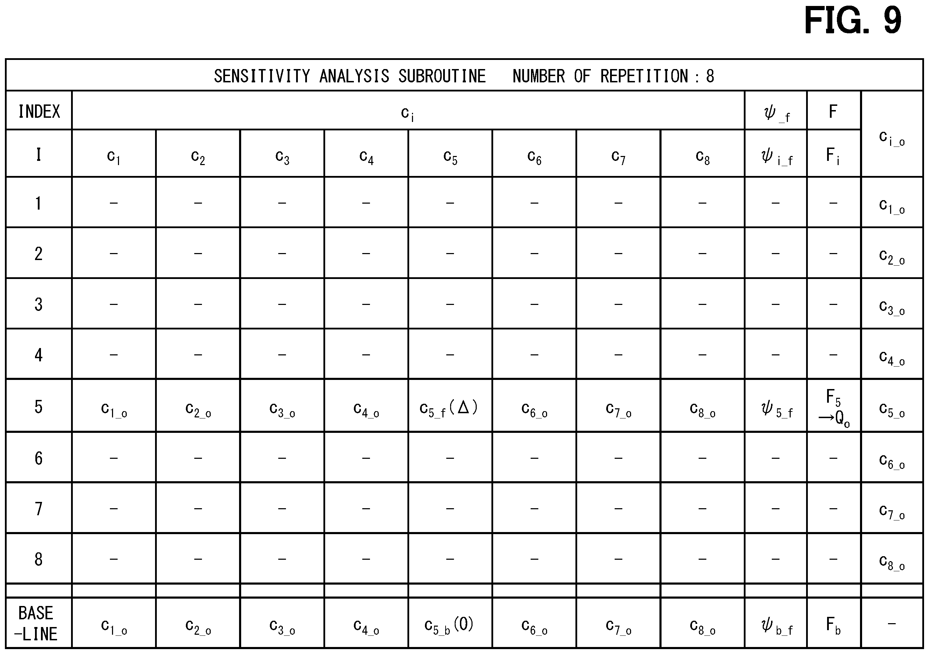

Note that, in FIG. 7, an example is shown, in which (i) an optimal strength parameter $c_{i\_o}$ is determined in the first cycle of the sensitivity analysis subroutine, by extracting an optimal qubit Qo with index i = 8, and (ii) thereafter an optimal strength parameter $c_{i\_o}$ is determined by the QGO process in the second cycle of the sensitivity analysis subroutine, by extracting an optimal qubit Qo with index i = 6. FIG. 8 shows an example, in which, after determination of the optimal strength parameters $c_{i\_o}$ by an extraction of the optimal qubits Qo with indices i = 8 and 6 in the first and second cycles of the sensitivity analysis subroutine, an optimal strength parameter $c_{i\_o}$ is determined by the QGO process in the third cycle of the sensitivity analysis subroutine by extracting an optimal qubit Qo with index i = 2. FIG. 9 shows an example, in which, after determination of the optimal strength parameters $c_{i\_o}$ by an extraction of the optimal qubits Qo with indices i = integer other than 5 in the first to seventh cycles of the sensitivity analysis subroutine, an optimal strength parameter $c_{i\_o}$ is determined by the QGO process in the eighth cycle of the sensitivity analysis subroutine by extracting an optimal qubit Qo with index i = 5.

In the QGO process, the optimization block 120 determines an optimal strength parameter $c_{i\_o}$ for each of the N qubits, by repeating the sensitivity analysis subroutine by N cycles matching a number N of qubits. In such manner, the QGO process after determining the optimal strength parameters $c_{i\_o}$ for all the qubits outputs an optimal solution OA of the combinatorial optimization problem, by mapping a set of the optimal strength parameters $c_{i\_o}$ to the solution of the combinatorial optimization problem by a number 26. During such an output, the QGO process stores the output of the optimal solution OA in the memory 10. Here, storage of the output in the memory 10 may either be (a) holding output data even when the quantum computing system 1 is turned off, or (b) erasure of output data when the quantum computing system 1 is turned off.

[Equation 26]

$$OA = (sgn\, c_{1\_o},\, sgn\, c_{2\_o}, \ldots, sgn\, c_{N\_o})$$

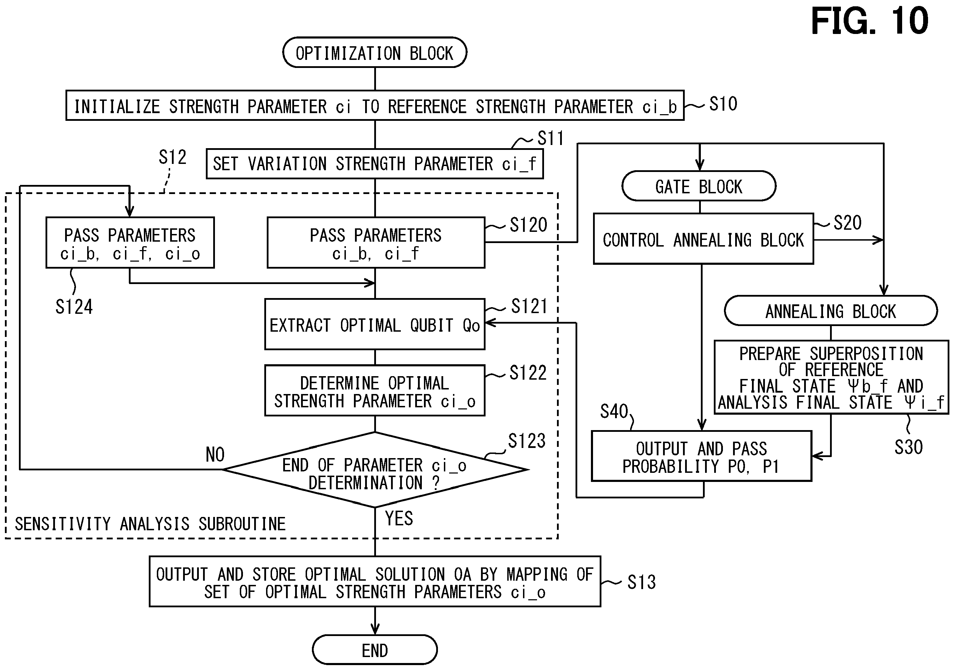

With the cooperation of the blocks 100, 110 described above, the processing method in which the quantum computing system 1 controls the quantum annealing with binary qubits to solve the combinatorial optimization problem with binary variables is performed according to the sequence diagram shown in FIG. 10. The processing method shown in the sequence diagram is performed in response to an instruction from an operator of the quantum computing system 1, for example. Here, S in the sequence diagram means each of multiple steps executed by instructions included in each of the processing programs stored in multiple memories 10.

In S10 of the QGO process, the optimization block 120 initializes the strength parameter $c_i$ for all pre-optimization qubits to the reference strength parameter $c_{i\_b}$. In S11 of the QGO process, the optimization block 120 sets the variation strength parameter $c_{i\_f}$, which is obtained by further changing the reference strength parameter $c_{i\_b}$, for each of the pre-optimization qubits. In S12 of the QGO process, the optimization block 120 repeatedly executes the sensitivity analysis subroutine including S120 to S124.

Specifically, in S120 of the sensitivity analysis subroutine, the optimization block 120 passes the reference strength parameter $c_{i\_b}$ and the variation strength parameter $c_{i\_f}$ to the annealing block 100. The gate block 110 controls the annealing block 100 in S20, which is started in response to this passing of parameters. Further, in S30 according to the above-described control, the annealing block 100 uses the passed reference strength parameter $c_{i\_b}$ and the controlled qubit Qa of the gate block 110 to prepare a superposed state of the reference final state $\psi_{b\_f}$ and the analysis final state $\psi_{i\_f}$. Then, in S40, the gate block 110 outputs, for each of the pre-optimization qubits by the quantum gate circuit QG, measurement data of the probabilities $P_0$ and $P_1$ regarding the states |0> and |1> of the controlled qubit Qa whose phase of the final states $\psi_{b\_f}$, $\psi_{i\_f}$ is kicked back, and passes the output measurement data to the optimization block 120.

In S121 of the sensitivity analysis subroutine, the optimization block 120 uses the analysis evaluation index $F_i$, which is the probability difference between the probabilities $P_0$ and $P_1$ passed from the gate block 110 in S40, as the evaluation index F, which is the phase information of the controlled qubit Qa, to perform the optimization operation. In such manner, the optimization block 120 extracts, in S121, the optimal qubit Qo having an optimal analysis evaluation index $F_i$, which is an imaginary part Im $<\varphi_{b\_f}|\varphi_{i\_f}>$ of an inner product of the final states $\psi_{b\_f}$, $\varphi_{i\_f}$, before and after the variation of the strength parameter $c_i$.

In S122 of the sensitivity analysis subroutine, the optimization block 120 determines the optimal strength parameter $c_{i\_o}$ for the optimal qubit Qo according to the analysis evaluation index $F_i$, which is the evaluation index F corresponding to the optimal qubit Qo extracted in S121. In S123 of the sensitivity analysis subroutine, the optimization block 120 determines whether or not the determination of the optimal strength parameters $c_{i\_o}$ for all of N qubits has been complete.

When a negative determination is made in S123, S124 is performed instead of S120, so that the sensitivity analysis subroutine is repeated. In S124, the optimization block 120 passes the parameters $c_{i\_b}$, $c_{i\_f}$, $c_{i\_o}$ to the annealing block 100, by (i) replacing the determined optimal strength parameter $c_{i\_o}$ with the reference strength parameter $c_{i\_b}$ that has a corresponding index i, and with (ii) the other reference strength parameter $c_{i\_b}$ and the variation strength parameter $c_{i\_f}$ set according to S120. In response to such passing described above, steps S20, S30, S40, S121, S122, S123, and S124 are performed, in which qubits other than the optimal qubit Qo in the past cycle are treated as remaining qubits before optimization.

On the other hand, when an affirmative determination is made in S123, the sequence diagram proceeds to S13 by ending the sensitivity analysis subroutine. In S13 of the QGO process, the optimization block 120 outputs the optimal solution OA of the combinatorial optimization problem, by mapping the set of the optimal strength parameters $c_{i\_o}$ determined for all of N qubits. Further, in S125, the optimization block 120 stores the output optimal solution OA in the memory 10. In such manner, one cycle of the process shown in the sequence diagram ends.

(Operational Effects)

In the QGO process of the present embodiment, the optimal values of the contribution of the orthogonal magnetic field function $H_y$ are sequentially determined for each of qubits corresponding to binary variables based on the final state $\psi\_f$ of the QA process that independently controls, in a time-dependent manner (i.e., that performs time control on), the contributions of the cost function $H_z$, the transverse magnetic field function $H_x$, and the orthogonal magnetic field function $H_y$. Then, the optimal qubit Qo is extracted, which optimizes the evaluation index F that gives the evaluation for the final state $\psi\_f$ of the QA process in which the strength parameter $c_i$ is varied for having the maximum value of the orthogonal magnetic field function $H_y$ regarding the pre-optimization qubit. At this time, the extraction of the optimal qubit Qo is performed based on the evaluation index F, which is the phase information of the controlled qubit Qa obtained by having the phase kickback of the final state $\psi\_f$ before and after the variation of the strength parameter $c_i$ by the quantum gate circuit QG.

According to the above, even when the annealing time T in the QA process is shortened, by sequentially determining, according to the evaluation index F, the strength parameter $c_i$ that is the optimal value of the extracted optimal qubit Qo, the solution space of the combinatorial optimization problem is narrowed down. Accordingly, highly-accurate optimal solution OA can be output by mapping the set of the strength parameters $c_i$ determined for all qubits. Therefore, it is possible to achieve both of a reduction in the annealing time T and a highly-accurate output of the optimal solution OA, without compromise. Highly-accurate optimal solution OA, that is in other words, accuracy of solution is high, may mean either (a) probability of having the optimal solution OA is high, or (b) output of the solution with the cost function $H_z$ having a low value after optimization.

(Other embodiments)

Although one embodiment has been described, the present disclosure should not be limited to the above embodiment, and may be applied to various other embodiments within the scope of the present disclosure.

In the optimization block 120 of a modification example, multiple optimal qubits Qo may be extracted in one cycle of the sensitivity analysis subroutine, in which case the optimal strength parameter $c_{i\_o}$ may be determined for each of the optimal qubits Qo. In the annealing block 100 of a modification example, by converting, via a time-controlled unitary conversion, (a) the y-direction components of the time-controlled Pauli matrix $\sigma_i^y$ represented by the number 9 into (b) the x-direction components of the time-controlled Pauli matrix $\sigma_i^x$ and the the z-direction components of the Pauli matrix $\sigma_i^z$ for obtaining a new total Hamiltonian H, such a time control may be realized.

In addition to the above, the above-described embodiments and modification examples may also be implemented using a computer device or a semiconductor device (such as a semiconductor chip) having the processors 12 and the memory 10 for at least performing the QGO process of the quantum computing system 1.

(Additional remarks)

The present specification discloses a plurality of Technical Thoughts listed below and a plurality of combinations thereof.

(Technical Thought 1)

A quantum computing system controlling quantum annealing and a quantum gate for processing a binary variable qubit to solve a combinatorial optimization problem of binary variables, in which a processor (12) is provided, and

the processor is configured to execute:
an annealing process for individually time-controlling a contribution of

(a) a cost function optimized in the combinatorial optimization problem,
(b) a transverse magnetic field function defining a magnetic field component orthogonal to the cost function, and
(c) an orthogonal magnetic field function defining a magnetic field component orthogonal to the cost function and the transverse magnetic field function, and

an optimization process for sequentially determining an optimal value of the contribution of the orthogonal magnetic field function based on a final state in the annealing process, for each of the binary variable qubits that constitute an optimal solution of the combinatorial optimization problem, and
when designating, as an optimal qubit, a qubit providing an optimal evaluation index in an evaluation of a final state of the annealing process in which a strength parameter of a pre-optimization qubit is varied for having a maximum value of the orthogonal magnetic field function, the optimization process includes:

(i) extracting of the optimal qubit based on the evaluation index, which is phase information of a controlled qubit whose final states before and after the variation of the strength parameter are phase kicked-back states by a quantum gate circuit (QG);
(ii) determining of the strength parameter, which is the optimal value of the extracted optimal qubit, according to the evaluation index; and
(iii) outputting of the optimal solution by mapping a set of the strength parameters determined regarding all qubits.

(Technical Thought 2)

The quantum computing system according to the technical thought 1, in which the optimization process includes an extraction of the optimal qubit based on the evaluation index which is an imaginary part of an inner product of the final states before and after the variation of the strength parameter, among the kicked-back phase information.

(Technical Thought 3)

The quantum computing system according to the technical thought 2, in which the optimization process includes a determination of the strength parameter which is the optimal value of the optimal qubit, according to the evaluation index which is an imaginary part of an inner product of the final states before and after the variation of the strength parameter, among the kicked-back phase information.

(Technical Thought 4)

The quantum computing system according to any one of the technical thoughts 1 to 3, in which the optimization process includes an extraction of the optimal qubit, which optimizes the evaluation index in case of varying the strength parameter that has been initialized to zero for the pre-optimization qubit.

(Technical Thought 5)

The quantum computing system according to the technical thought 4, in which, assuming that (i) an initialized strength parameter is used as a reference strength parameter and (ii) a varied reference strength parameter is used as a variation strength parameter, and
the optimization process includes an extraction of the optimal qubit based on the evaluation index which is the phase information having phase kickback of (a) a final state corresponding to the before-variation strength parameter and (b) a final state corresponding to the after-variation strength parameter.

(Technical Thought 6)

The quantum computing system according to the technical thought 5, in which the optimization process includes a determination of the strength parameter that is an optimal value of the optimal qubit according to the evaluation index, which is the phase information obtained by having phase kickback of (a) a final state corresponding to the before-variation strength parameter and (b) a final state corresponding to the after-variation strength parameter.

(Technical Thought 7)

The quantum computing system according to any one of the technical thoughts 1 to 6, in which a storage medium (10) is provided, and

the optimization process further includes a storage of the optimal solution in the storage medium.

(Technical Thought 8)

The quantum computing system according to any one of the technical thoughts 1 to 7, in which the annealing process includes obtaining of a final state of a wave function corresponding to a total Hamiltonian of the cost function, the transverse magnetic field function and the orthogonal magnetic field function based on time control of the total Hamiltonian by the quantum annealing.

(Technical Thought 9)

The quantum computing system according to the technical thought 8, in which the annealing process includes

an increase of the contribution of the cost function from zero to an end value as time elapses,
a decrease of the contribution of the transverse magnetic field function from a start value to zero as time elapses, and
a decrease of the contribution of the orthogonal magnetic field function to zero after an increase thereof from zero to the maximum value as time elapses.

(Technical Thought 10)

A quantum computing device controlling quantum annealing and a quantum gate for processing a binary variable qubit to solve a combinatorial optimization problem of binary variables, in which a processor (12) is provided, and when designating that

(A) an annealing process is a process for individually time-controlling a contribution of

(a) a cost function optimized in the combinatorial optimization problem,
(b) a transverse magnetic field function defining a magnetic field component orthogonal to the cost function, and
(c) an orthogonal magnetic field function defining a magnetic field component orthogonal to the cost function and the transverse magnetic field function, and

(B) an optimization process is a process for sequentially determining an optimal value of the contribution of the orthogonal magnetic field function based on a final state in the annealing process, for each of the binary variable qubits that constitute an optimal solution of the combinatorial optimization problem, and
(C) an optimal qubit is a qubit providing an optimal evaluation index in an evaluation of a final state of the annealing process in which a strength parameter of a pre-optimization qubit is varied for having a maximum value of the orthogonal magnetic field function,
the processor is configured to perform the optimization process including:

(i) extracting of the optimal qubit based on the evaluation index, which is phase information of a controlled qubit whose final states before and after the variation of the strength parameter are phase kicked-back states by a quantum gate circuit (QG);
(ii) determining of the strength parameter, which is the optimal value of the extracted optimal qubit, according to the evaluation index; and
(iii) outputting of the optimal solution by mapping a set of the strength parameters determined regarding all qubits.

The technical thoughts 1 to 10 described above may be implemented in the form of methods and programs.

**Claims**

1. A quantum computing system controlling quantum annealing and a quantum gate for processing a binary variable qubit to solve a combinatorial optimization problem of binary variables, the quantum computing system comprising:
a processor (12) configured to execute:

an annealing process for individually time-controlling a contribution of each of:

(a) a cost function optimized in the combinatorial optimization problem;
(b) a transverse magnetic field function defining a magnetic field component orthogonal to the cost function; and
(c) an orthogonal magnetic field function defining a magnetic field component orthogonal to both the cost function and the transverse magnetic field function; and

an optimization process for sequentially determining, for each of the binary variable qubits that constitute an optimal solution of the combinatorial optimization problem, an optimal value of the contribution of the orthogonal magnetic field function based on a final state in the annealing process, and
an optimal qubit is defined as a qubit providing an optimal evaluation index in an evaluation of a final state of the annealing process in which a strength parameter of a pre-optimization qubit is varied for having a maximum value of the orthogonal magnetic field function, the optimization process includes:

(i) extracting of the optimal qubit based on the evaluation index, which is phase information of a controlled qubit whose final states before and after the variation of the strength parameter are phase kicked-back states by a quantum gate circuit (QG);
(ii) determining of the strength parameter, which is the optimal value of the extracted optimal qubit, according to the evaluation index; and
(iii) outputting of the optimal solution by mapping a set of the strength parameters determined for all qubits.

2. The quantum computing system of claim 1, wherein
the optimization process further includes extracting of the optimal qubit based on the evaluation index which is an imaginary part of an inner product of the final states before and after the variation of the strength parameter, among the kicked-back phase information.

3. The quantum computing system of claim 2, wherein
the optimization process further includes determining of the strength parameter which is the optimal value of the optimal qubit, according to the evaluation index which is an imaginary part of an inner product of the final states before and after the variation of the strength parameter, among the kicked-back phase information.

4. The quantum computing system of any one of claims 1 to 3, wherein
the optimization process further includes extracting of the optimal qubit, which optimizes the evaluation index when the strength parameter that has been initialized to zero for the pre-optimization qubit is varied.

5. The quantum computing system of claim 4, wherein

the strength parameter that has been initialized to zero is defined as a reference strength parameter,
the strength parameter that has been varied from the reference strength parameter is defined as a variation strength parameter, and
the optimization process further includes extracting of the optimal qubit based on the evaluation index which is the phase information having phase kickback of (a) a final state corresponding to the strength parameter before varied and (b) a final state corresponding to the strength parameter after varied.

6. The quantum computing system of claim 5, wherein
the optimization process further includes determining of the strength parameter that is an optimal value of the optimal qubit according to the evaluation index, which is the phase information obtained by having phase kickback of (a) a final state corresponding to the strength parameter before varied and (b) a final state corresponding to the strength parameter after varied.

7. The quantum computing system of any one of claims 1 to 6, further comprising

a storage medium (10), wherein
the optimization process further includes storing of the optimal solution in the storge medium.

8. The quantum computing system of any one of claims 1 to 7, wherein
the annealing process includes obtaining of a final state of a wave function corresponding to a total Hamiltonian of the cost function, the transverse magnetic field function and the orthogonal magnetic field function based on time control of the total Hamiltonian by the quantum annealing.

9. The quantum computing system of claim 8, wherein
the annealing process further includes:

increasing of the contribution of the cost function from zero to an end value as time elapses;
decreasing of the contribution of the transverse magnetic field function from a start value to zero as time elapses; and
decreasing of the contribution of the orthogonal magnetic field function to zero after increasing thereof from zero to the maximum value as time elapses.

10. A quantum computing device controlling quantum annealing and a quantum gate for processing a binary variable qubit to solve a combinatorial optimization problem of binary variables, the quantum computing device comprising:
a processor (12), wherein

(A) an annealing process is defined as a process for individually time-controlling a contribution of each of:

(a) a cost function optimized in the combinatorial optimization problem;
(b) a transverse magnetic field function defining a magnetic field component orthogonal to the cost function; and
(c) an orthogonal magnetic field function defining a magnetic field component orthogonal to the cost function and the transverse magnetic field function, and

(B) an optimization process is defined as a process for sequentially determining, for each of the binary variable qubits that constitute an optimal solution of the combinatorial optimization problem, an optimal value of the contribution of the orthogonal magnetic field function based on a final state in the annealing process, and
(C) an optimal qubit is defined as a qubit for providing an optimal evaluation index in an evaluation of a final state of the annealing process in which a strength parameter of a pre-optimization qubit is varied for having a maximum value of the orthogonal magnetic field function,

the processor is configured to perform the optimization process including:

(i) extracting of the optimal qubit based on the evaluation index, which is phase information of a controlled qubit whose final states before and after the variation of the strength parameter are phase kicked-back states by a quantum gate circuit (QG);
(ii) determining of the strength parameter, which is the optimal value of the extracted optimal qubit, according to the evaluation index; and
(iii) outputting of the optimal solution by mapping a set of the strength parameters determined for all qubits.

11. A processing method performed by a processor (12), for controlling quantum annealing and a quantum gate for processing a binary variable qubit and for solving a combinatorial optimization problem of binary variables, the processing method comprising:

an annealing process for individually time-controlling a contribution of each of:

(a) a cost function optimized in the combinatorial optimization problem;
(b) a transverse magnetic field function defining a magnetic field component orthogonal to the cost function; and
(c) an orthogonal magnetic field function defining a magnetic field component orthogonal to the cost function and the transverse magnetic field function; and

an optimization process for sequentially determining, for each of the binary variable qubits that constitute an optimal solution of the combinatorial optimization problem, an optimal value of the contribution of the orthogonal magnetic field function based on a final state in the annealing process, and
an optimal qubit is defined as a qubit providing an optimal evaluation index in an evaluation of a final state of the annealing process in which a strength parameter of a pre-optimization qubit is varied for having a maximum value of the orthogonal magnetic field function, the optimization process includes:

(i) extracting of the optimal qubit based on the evaluation index, which is phase information of a controlled qubit whose final states before and after the variation of the strength parameter are phase kicked-back states by a quantum gate circuit (QG);

(ii) determining of the strength parameter, which is the optimal value of the extracted optimal qubit, according to the evaluation index; and

(iii) outputting of the optimal solution by mapping a set of the strength parameters determined for all qubits.

12. A processing method performed by a processor (12), for controlling quantum annealing and a quantum gate for processing a binary variable qubit and for solving a combinatorial optimization problem of binary variables, the processing method comprising:

a process defined as an annealing process for individually time-controlling a contribution of each of:

(a) a cost function optimized in the combinatorial optimization problem;

(b) a transverse magnetic field function defining a magnetic field component orthogonal to the cost function; and

(c) an orthogonal magnetic field function defining a magnetic field component orthogonal to the cost function and the transverse magnetic field function; and

a process is defined as an optimization process for sequentially determining, for each of the binary variable qubits that constitute an optimal solution of the combinatorial optimization problem, an optimal value of the contribution of the orthogonal magnetic field function based on a final state in the annealing process, and

an optimal qubit is defined as a qubit providing an optimal evaluation index in an evaluation of a final state of the annealing process in which a strength parameter of a pre-optimization qubit is varied for having a maximum value of the orthogonal magnetic field function, the optimization process includes:

(i) extracting of the optimal qubit based on the evaluation index, which is phase information of a controlled qubit whose final states before and after the variation of the strength parameter are phase kicked-back states by a quantum gate circuit (QG);

(ii) determining of the strength parameter, which is the optimal value of the extracted optimal qubit, according to the evaluation index; and

(iii) outputting of the optimal solution by mapping a set of the strength parameters determined for all qubits.

13. A processing program including instructions stored in a storage medium (10) and executed by a processor (12), for controlling quantum annealing and a quantum gate for processing a binary variable qubit and for solving a combinatorial optimization problem of binary variables, processes provided by the processing program comprising:

an annealing process performed according to the instructions for individually time-controlling a contribution of each of:

(a) a cost function optimized in the combinatorial optimization problem;

(b) a transverse magnetic field function defining a magnetic field component orthogonal to the cost function; and

(c) an orthogonal magnetic field function defining a magnetic field component orthogonal to the cost function and the transverse magnetic field function; and

an optimization process performed according to the instructions for sequentially determining, for each of the binary variable qubits that constitute an optimal solution of the combinatorial optimization problem, an optimal value of the contribution of the orthogonal magnetic field function based on a final state in the annealing process, wherein

an optimal qubit is defined as a qubit providing an optimal evaluation index in an evaluation of a final state of the annealing process in which a strength parameter of a pre-optimization qubit is varied for having a maximum value of the orthogonal magnetic field function, the optimization process includes:

(i) extracting of the optimal qubit based on the evaluation index, which is phase information of a controlled qubit whose final states before and after the variation of the strength parameter are phase kicked-back states by a quantum gate circuit (QG);

(ii) determining of the strength parameter, which is the optimal value of the extracted optimal qubit, according to the evaluation index; and
(iii) outputting of the optimal solution by mapping a set of the strength parameters determined for all qubits.

14. A processing program including instructions stored in a storage medium (10) and executed by a processor (12), for controlling quantum annealing and a quantum gate for processing a binary variable qubit and for solving a combinatorial optimization problem of binary variables, processes provided by the processing program comprising:

a process designated as an annealing process for individually time-controlling a contribution of each of:

(a) a cost function optimized in the combinatorial optimization problem;
(b) a transverse magnetic field function defining a magnetic field component orthogonal to the cost function; and
(c) an orthogonal magnetic field function defining a magnetic field component orthogonal to the cost function and the transverse magnetic field function; and

a process designated as an optimization process for sequentially determining, for each of the binary variable qubits that constitute an optimal solution of the combinatorial optimization problem, an optimal value of the contribution of the orthogonal magnetic field function based on a final state in the annealing process, and an optimal qubit is defined as a qubit providing an optimal evaluation index in an evaluation of a final state of the annealing process in which a strength parameter of a pre-optimization qubit is varied for having a maximum value of the orthogonal magnetic field function, the optimization process includes:

(i) extracting of the optimal qubit based on the evaluation index, which is phase information of a controlled qubit whose final states before and after the variation of the strength parameter are phase kicked-back states by a quantum gate circuit (QG);
(ii) determining of the strength parameter, which is the optimal value of the extracted optimal qubit, according to the evaluation index; and
(iii) outputting of the optimal solution by mapping a set of the strength parameters determined for all qubits.

# FIG. 1

1

PROCESSING SYSTEM

10

MEMORY

PROCESSOR

12

# FIG. 2

1

PROCESSING SYSTEM

$c_{i\_b}$ , $c_{i\_f}$ , $c_{i\_o}$

ANNEALING BLOCK

100

$Q_a$          $Q_r : \psi_{b\_f}$ , $\psi_{i\_f}$

GATE BLOCK

110

$P_0$ , $P_1$

OPTIMIZATION BLOCK

120

**FIG. 3**

FIG. 4

EP 4 386 635 A1

FIG. 5

EP 4 386 635 A1

# FIG. 6

| SENSITIVITY ANALYSIS SUBROUTINE　　NUMBER OF REPETITION : 1 | | | | | | | | | | | |
| INDEX | $c_i$ | | | | | | | | $\psi_{\_f}$ | F | |
| i | $c_1$ | $c_2$ | $c_3$ | $c_4$ | $c_5$ | $c_6$ | $c_7$ | $c_8$ | $\psi_{i\_f}$ | $F_i$ | $c_{i\_o}$ |
|---|---|---|---|---|---|---|---|---|---|---|---|
| 1 | $c_{1\_f}(\Delta)$ | $c_{2\_b}(0)$ | $c_{3\_b}(0)$ | $c_{4\_b}(0)$ | $c_{5\_b}(0)$ | $c_{6\_b}(0)$ | $c_{7\_b}(0)$ | $c_{8\_b}(0)$ | $\psi_{1\_f}$ | $F_1$ | − |
| 2 | $c_{1\_b}(0)$ | $c_{2\_f}(\Delta)$ | $c_{3\_b}(0)$ | $c_{4\_b}(0)$ | $c_{5\_b}(0)$ | $c_{6\_b}(0)$ | $c_{7\_b}(0)$ | $c_{8\_b}(0)$ | $\psi_{2\_f}$ | $F_2$ | − |
| 3 | $c_{1\_b}(0)$ | $c_{2\_b}(0)$ | $c_{3\_f}(\Delta)$ | $c_{4\_b}(0)$ | $c_{5\_b}(0)$ | $c_{6\_b}(0)$ | $c_{7\_b}(0)$ | $c_{8\_b}(0)$ | $\psi_{3\_f}$ | $F_3$ | − |
| 4 | $c_{1\_b}(0)$ | $c_{2\_b}(0)$ | $c_{3\_b}(0)$ | $c_{4\_f}(\Delta)$ | $c_{5\_b}(0)$ | $c_{6\_b}(0)$ | $c_{7\_b}(0)$ | $c_{8\_b}(0)$ | $\psi_{4\_f}$ | $F_4$ | − |
| 5 | $c_{1\_b}(0)$ | $c_{2\_b}(0)$ | $c_{3\_b}(0)$ | $c_{4\_b}(0)$ | $c_{5\_f}(\Delta)$ | $c_{6\_b}(0)$ | $c_{7\_b}(0)$ | $c_{8\_b}(0)$ | $\psi_{5\_f}$ | $F_5$ | − |
| 6 | $c_{1\_b}(0)$ | $c_{2\_b}(0)$ | $c_{3\_b}(0)$ | $c_{4\_b}(0)$ | $c_{5\_b}(0)$ | $c_{6\_f}(\Delta)$ | $c_{7\_b}(0)$ | $c_{8\_b}(0)$ | $\psi_{6\_f}$ | $F_6$ | − |
| 7 | $c_{1\_b}(0)$ | $c_{2\_b}(0)$ | $c_{3\_b}(0)$ | $c_{4\_b}(0)$ | $c_{5\_b}(0)$ | $c_{6\_b}(0)$ | $c_{7\_f}(\Delta)$ | $c_{8\_b}(0)$ | $\psi_{7\_f}$ | $F_7$ | − |
| 8 | $c_{1\_b}(0)$ | $c_{2\_b}(0)$ | $c_{3\_b}(0)$ | $c_{4\_b}(0)$ | $c_{5\_b}(0)$ | $c_{6\_b}(0)$ | $c_{7\_b}(0)$ | $c_{8\_f}(\Delta)$ | $\psi_{8\_f}$ | $F_8 \rightarrow Q_o$ | $c_{8\_o}$ |
| BASE-LINE | $c_{1\_b}(0)$ | $c_{2\_b}(0)$ | $c_{3\_b}(0)$ | $c_{4\_b}(0)$ | $c_{5\_b}(0)$ | $c_{6\_b}(0)$ | $c_{7\_b}(0)$ | $c_{8\_b}(0)$ | $\psi_{b\_f}$ | $F_b$ | − |

EP 4 386 635 A1

# FIG. 7

| SENSITIVITY ANALYSIS SUBROUTINE — NUMBER OF REPETITION : 2 | | | | | | | | | | | |
|---|---|---|---|---|---|---|---|---|---|---|---|
| INDEX | $c_i$ | | | | | | | | $\psi_{\_f}$ | F | |
| $i$ | $c_1$ | $c_2$ | $c_3$ | $c_4$ | $c_5$ | $c_6$ | $c_7$ | $c_8$ | $\psi_{i\_f}$ | $F_i$ | $c_{i\_o}$ |
| 1 | $c_{1\_f}(\Delta)$ | $c_{2\_b}(0)$ | $c_{3\_b}(0)$ | $c_{4\_b}(0)$ | $c_{5\_b}(0)$ | $c_{6\_b}(0)$ | $c_{7\_b}(0)$ | $c_{8\_o}$ | $\psi_{1\_f}$ | $F_1$ | – |
| 2 | $c_{1\_b}(0)$ | $c_{2\_f}(\Delta)$ | $c_{3\_b}(0)$ | $c_{4\_b}(0)$ | $c_{5\_b}(0)$ | $c_{6\_b}(0)$ | $c_{7\_b}(0)$ | $c_{8\_o}$ | $\psi_{2\_f}$ | $F_2$ | – |
| 3 | $c_{1\_b}(0)$ | $c_{2\_b}(0)$ | $c_{3\_f}(\Delta)$ | $c_{4\_b}(0)$ | $c_{5\_b}(0)$ | $c_{6\_b}(0)$ | $c_{7\_b}(0)$ | $c_{8\_o}$ | $\psi_{3\_f}$ | $F_3$ | – |
| 4 | $c_{1\_b}(0)$ | $c_{2\_b}(0)$ | $c_{3\_b}(0)$ | $c_{4\_f}(\Delta)$ | $c_{5\_b}(0)$ | $c_{6\_b}(0)$ | $c_{7\_b}(0)$ | $c_{8\_o}$ | $\psi_{4\_f}$ | $F_4$ | – |
| 5 | $c_{1\_b}(0)$ | $c_{2\_b}(0)$ | $c_{3\_b}(0)$ | $c_{4\_b}(0)$ | $c_{5\_f}(\Delta)$ | $c_{6\_b}(0)$ | $c_{7\_b}(0)$ | $c_{8\_o}$ | $\psi_{5\_f}$ | $F_5$ | – |
| 6 | $c_{1\_b}(0)$ | $c_{2\_b}(0)$ | $c_{3\_b}(0)$ | $c_{4\_b}(0)$ | $c_{5\_b}(0)$ | $c_{6\_f}(\Delta)$ | $c_{7\_b}(0)$ | $c_{8\_o}$ | $\psi_{6\_f}$ | $F_6 \rightarrow Q_o$ | $c_{6\_o}$ |
| 7 | $c_{1\_b}(0)$ | $c_{2\_b}(0)$ | $c_{3\_b}(0)$ | $c_{4\_b}(0)$ | $c_{5\_b}(0)$ | $c_{6\_b}(0)$ | $c_{7\_f}(\Delta)$ | $c_{8\_o}$ | $\psi_{7\_f}$ | $F_7$ | – |
| 8 | – | – | – | – | – | – | – | – | – | – | $c_{8\_o}$ |
| BASE–LINE | $c_{1\_b}(0)$ | $c_{2\_b}(0)$ | $c_{3\_b}(0)$ | $c_{4\_b}(0)$ | $c_{5\_b}(0)$ | $c_{6\_b}(0)$ | $c_{7\_b}(0)$ | $c_{8\_o}$ | $\psi_{b\_f}$ | $F_b$ | – |

EP 4 386 635 A1

# FIG. 8

| SENSITIVITY ANALYSIS SUBROUTINE  NUMBER OF REPETITION : 3 | | | | | | | | | | | |
|---|---|---|---|---|---|---|---|---|---|---|---|
| INDEX | $c_i$ | | | | | | | | $\psi_{\_f}$ | F | |
| i | $c_1$ | $c_2$ | $c_3$ | $c_4$ | $c_5$ | $c_6$ | $c_7$ | $c_8$ | $\psi_{i\_f}$ | $F_i$ | $c_{i\_o}$ |
| 1 | $c_{1\_f}(\Delta)$ | $c_{2\_b}(0)$ | $c_{3\_b}(0)$ | $c_{4\_b}(0)$ | $c_{5\_b}(0)$ | $c_{6\_o}$ | $c_{7\_b}(0)$ | $c_{8\_o}$ | $\psi_{1\_f}$ | $F_1$ | – |
| 2 | $c_{1\_b}(0)$ | $c_{2\_f}(\Delta)$ | $c_{3\_b}(0)$ | $c_{4\_b}(0)$ | $c_{5\_b}(0)$ | $c_{6\_o}$ | $c_{7\_b}(0)$ | $c_{8\_o}$ | $\psi_{2\_f}$ | $F_2 \rightarrow Q_o$ | $c_{2\_o}$ |
| 3 | $c_{1\_b}(0)$ | $c_{2\_b}(0)$ | $c_{3\_f}(\Delta)$ | $c_{4\_b}(0)$ | $c_{5\_b}(0)$ | $c_{6\_o}$ | $c_{7\_b}(0)$ | $c_{8\_o}$ | $\psi_{3\_f}$ | $F_3$ | – |
| 4 | $c_{1\_b}(0)$ | $c_{2\_b}(0)$ | $c_{3\_b}(0)$ | $c_{4\_f}(\Delta)$ | $c_{5\_b}(0)$ | $c_{6\_o}$ | $c_{7\_b}(0)$ | $c_{8\_o}$ | $\psi_{4\_f}$ | $F_4$ | – |
| 5 | $c_{1\_b}(0)$ | $c_{2\_b}(0)$ | $c_{3\_b}(0)$ | $c_{4\_b}(0)$ | $c_{5\_f}(\Delta)$ | $c_{6\_o}$ | $c_{7\_b}(0)$ | $c_{8\_o}$ | $\psi_{5\_f}$ | $F_5$ | – |
| 6 | – | – | – | – | – | – | – | – | – | – | $c_{6\_o}$ |
| 7 | $c_{1\_b}(0)$ | $c_{2\_b}(0)$ | $c_{3\_b}(0)$ | $c_{4\_b}(0)$ | $c_{5\_b}(0)$ | $c_{6\_o}$ | $c_{7\_f}(\Delta)$ | $c_{8\_o}$ | $\psi_{7\_f}$ | $F_7$ | – |
| 8 | – | – | – | – | – | – | – | – | – | – | $c_{8\_o}$ |
| BASE–LINE | $c_{1\_b}(0)$ | $c_{2\_b}(0)$ | $c_{3\_b}(0)$ | $c_{4\_b}(0)$ | $c_{5\_b}(0)$ | $c_{6\_o}$ | $c_{7\_b}(0)$ | $c_{8\_o}$ | $\psi_{b\_f}$ | $F_b$ | – |

EP 4 386 635 A1

FIG. 9

EP 4 386 635 A1

| SENSITIVITY ANALYSIS SUBROUTINE    NUMBER OF REPETITION : 8 | | | | | | | | | | | |
|---|---|---|---|---|---|---|---|---|---|---|---|
| INDEX | $c_i$ | | | | | | | | $\psi_{\_f}$ | F | $c_{i\_o}$ |
| I | $c_1$ | $c_2$ | $c_3$ | $c_4$ | $c_5$ | $c_6$ | $c_7$ | $c_8$ | $\psi_{i\_f}$ | $F_i$ | |
| 1 | – | – | – | – | – | – | – | – | – | – | $c_{1\_o}$ |
| 2 | – | – | – | – | – | – | – | – | – | – | $c_{2\_o}$ |
| 3 | – | – | – | – | – | – | – | – | – | – | $c_{3\_o}$ |
| 4 | – | – | – | – | – | – | – | – | – | – | $c_{4\_o}$ |
| 5 | $c_{1\_o}$ | $c_{2\_o}$ | $c_{3\_o}$ | $c_{4\_o}$ | $c_{5\_f}(\Delta)$ | $c_{6\_o}$ | $c_{7\_o}$ | $c_{8\_o}$ | $\psi_{5\_f}$ | $F_5 \rightarrow Q_o$ | $c_{5\_o}$ |
| 6 | – | – | – | – | – | – | – | – | – | – | $c_{6\_o}$ |
| 7 | – | – | – | – | – | – | – | – | – | – | $c_{7\_o}$ |
| 8 | – | – | – | – | – | – | – | – | – | – | $c_{8\_o}$ |
| BASE–LINE | $c_{1\_o}$ | $c_{2\_o}$ | $c_{3\_o}$ | $c_{4\_o}$ | $c_{5\_b}(0)$ | $c_{6\_o}$ | $c_{7\_o}$ | $c_{8\_o}$ | $\psi_{b\_f}$ | $F_b$ | – |

FIG. 10

EP 4 386 635 A1

```
                    ( OPTIMIZATION BLOCK )

  INITIALIZE STRENGTH PARAMETER ci TO REFERENCE STRENGTH PARAMETER ci_b  ~S10

                  ~S11
          SET VARIATION STRENGTH PARAMETER ci_f                          ┌──────────────
  S12                                                                    │
┌ ─ ─ ─ ─ ─ ─ ─ ─ ─ ─ ─ ─ ─ ─ ─ ─ ─ ─ ─ ─ ─ ─ ─ ─ ─ ─ ─ ─ ┐        ( GATE BLOCK )
                                                                         │
│ ┌──────────────┐        ┌──────────────┐  ~S120          │    CONTROL ANNEALING BLOCK  ~S20
    PASS PARAMETERS          PASS PARAMETERS                      │                          │
│ │ ci_b, ci_f, ci_o│      │  ci_b, ci_f  │────────────────│──────┘                          │
  └──────────────┘        └──────────────┘                  │                                ▼
│   S124                           │                        │                       ( ANNEALING BLOCK )
                                   ▼                        │                                │
│                         ┌──────────────┐  ~S121           │              ┌────────────────────────────┐
                           EXTRACT OPTIMAL QUBIT Qo ◄───────┼──────        PREPARE SUPERPOSITION
│                         └──────────────┘                  │                 OF REFERENCE
                                   │                        │              FINAL STATE Ψb_f AND
│                         ┌──────────────┐  ~S122            │           ANALYSIS FINAL STATE Ψi_f
                           DETERMINE OPTIMAL                 │              └────────────────────────────┘
│                          STRENGTH PARAMETER ci_o           │   S40                      │    S30
                          └──────────────┘                  │    ┌──────────────┐         │
│                                  │              ~S123      │      OUTPUT AND PASS  ◄──────┘
        NO            ◄─── END OF PARAMETER ci_o             │     PROBABILITY P0, P1
│                         DETERMINATION ?                    │    └──────────────┘
  SENSITIVITY ANALYSIS SUBROUTINE         YES                │
└ ─ ─ ─ ─ ─ ─ ─ ─ ─ ─ ─ ─ ─ ─ ─ ┬ ─ ─ ─ ─ ─ ─ ─ ─ ─ ─ ┘
                                 ▼
  ┌────────────────────────────────────────────────────────┐
    OUTPUT AND STORE OPTIMAL SOLUTION OA BY MAPPING OF      ~S13
    SET OF OPTIMAL STRENGTH PARAMETERS ci_o
  └────────────────────────────────────────────────────────┘
                                 ▼
                             ( END )
```

Europäisches
Patentamt

European
Patent Office

Office européen
des brevets

## EUROPEAN SEARCH REPORT

**Application Number**

EP 23 21 3987

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KADOWAKI TADASHI ET AL: "Greedy parameter optimization for diabatic quantum annealing", PHILOSOPHICAL TRANSACTIONS A .MATHEMATICAL, PHYSICAL AND ENGINEERING SCIENCES, vol. 381, no. 2241, 26 November 2021 (2021-11-26), XP093057060, GB ISSN: 1364-503X, DOI: 10.1098/rsta.2021.0416 * page 1 – page 14 * | 1-14 | INV. G06N10/60 |
| A | LUISE PRIELINGER ET AL: "Two-parameter counter-diabatic driving in quantum annealing", ARXIV.ORG, CORNELL UNIVERSITY LIBRARY, 201 OLIN LIBRARY CORNELL UNIVERSITY ITHACA, NY 14853, 9 March 2021 (2021-03-09), XP081898931, DOI: 10.1103/PHYSREVRESEARCH.3.013227 * page 1 – page 9, right-hand column, paragraph 1 * * Appendix A * | 1-14 | |
| A | AYANZADEH RAMIN ET AL: "Multi-qubit correction for quantum annealers", SCIENTIFIC REPORTS, vol. 11, no. 1, 9 August 2021 (2021-08-09), XP093147124, US ISSN: 2045-2322, DOI: 10.1038/s41598-021-95482-w * page 1 – page 11, paragraph 2 * | 1-14 | |

TECHNICAL FIELDS SEARCHED (IPC)

G06N

–/––

The present search report has been drawn up for all claims

| Place of search | Date of completion of the search | Examiner |
|---|---|---|
| The Hague | 18 April 2024 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

**EUROPEAN SEARCH REPORT**

Europäisches Patentamt
European Patent Office
Office européen des brevets

Application Number

EP 23 21 3987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/067567 A1 (O`BRIEN THOMAS EUGENE [DE] ET AL) 3 March 2022 (2022-03-03) * the whole document * | 1-14 | |
| X,P | EP 4 270 262 A1 (DENSO CORP [JP]) 1 November 2023 (2023-11-01) * the whole document * * esp. claims 1-15 * * esp. claims 1-14 * | 1-14 | |

TECHNICAL FIELDS SEARCHED (IPC)

The present search report has been drawn up for all claims

| Place of search | Date of completion of the search | Examiner |
|---|---|---|
| The Hague | 18 April 2024 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 3987

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2024

| Patent document cited in search report | | Publication date | Patent family member(s) | | Publication date |
|---|---|---|---|---|---|
| US 2022067567 | A1 | 03-03-2022 | AU 2021336875 | A1 | 30-03-2023 |
| | | | AU 2024200550 | A1 | 15-02-2024 |
| | | | CA 3191400 | A1 | 10-03-2022 |
| | | | CN 116508030 | A | 28-07-2023 |
| | | | EP 4189610 | A1 | 07-06-2023 |
| | | | US 2022067567 | A1 | 03-03-2022 |
| | | | WO 2022051395 | A1 | 10-03-2022 |
| EP 4270262 | A1 | 01-11-2023 | EP 4270262 | A1 | 01-11-2023 |
| | | | JP 2023161480 | A | 07-11-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TADASHI KADOWAKI ; HIDETOSHI NISHIMORI.** Quantum annealing in the transverse Ising model. *Phys. Rev.,* 1998, vol. E 58, 5355